# EUROPEAN PATENT SPECIFICATION

(11) **EP 3 600 942 B1**
(45) Date of publication and mention of the grant of the patent: **27.10.2021**
(21) Application number: 18708442.1
(22) Date of filing: 09.03.2018
(51) Int. Cl.: B60L 50/50

(54) **SYSTEM FOR AND METHOD OF MANAGING AND CONTROLLING THE SPEED OF A VEHICLE, PARTICULARLY FOR MEDIUM TO LONG JOURNEYS**
SYSTEM UND VERFAHREN ZUR VERWALTUNG UND STEUERUNG DER GESCHWINDIGKEIT EINES FAHRZEUGS, INSBESONDERE FÜR MITTELLANGE BIS LANGE REISEN
SYSTÈME ET PROCÉDÉ DE GESTION ET DE RÉGULATION DE LA VITESSE D'UN VÉHICULE, EN PARTICULIER POUR DES TRAJETS MOYENS À LONGS

(30) Priority: 22.03.2017 IT 201700031283; 02.11.2017 IT 201700124511
(43) Date of publication of application: 05.02.2020
(73) Proprietor: Spacone, Leonardo, 53045 Montepulciano (IT)
(72) Inventor: Spacone, Leonardo, 53045 Montepulciano (IT)
(74) Representative: Modiano, Micaela Nadia
(86) International application number: PCT/EP2018/055902
(87) International publication number: WO 2018/172102

(56) References cited:
- WO-A2-2012/123862
- US-A- 5 627 752

## Description

The present invention relates to a system for and a method of managing and controlling the speed of a vehicle.

Thanks to the constant development of increasingly leading-edge technologies, which among other things make it possible to increase the ratio between operating time and battery weight, and thanks to a heightened awareness of the environmental impact associated with road transport, the electric vehicle sector is going through an unequaled period of growth, putting exclusively electrically-powered vehicles on the market at affordable prices and with operating times that are such that they allow small and medium journeys without having to constantly recharge the batteries with which they are fitted.

Such vehicles are even provided with satellite navigation systems and driving assistance systems, such as for example devices for automatically maintaining the cruise speed - better known as "cruise control" - which operate just like the ones with which traditional hydrocarbon-powered vehicles are provided.

So, while when driving a conventional hydrocarbon-powered vehicle, one can set the navigation system and the cruise speed as a function of the route to follow and of the maximum speed limits imposed by the Highway Code or by the weather conditions and the physical state of the road surface, without worrying about the autonomy of the vehicle because the road network is provided with innumerable service stations, when driving a vehicle powered completely by electricity, its autonomy and the planning of intermediate stops where there are electrical charging points become two factors of primary interest if one does not wish to risk having to have the vehicle towed because it ran out of energy where there are no electrical charging points.

In addition to what is described above, it should be kept in mind that automatic cruise speed devices of the conventional type applied to vehicles with electric motors have a very elementary operating logic, whereby they modulate the power of the electric motor if driving force needs to be generated in order to maintain the preset speed on uphill sections and they apply the brakes with regeneration of electricity if the vehicle needs to be braked in order to maintain the preset speed on downhill sections.

Although regeneration while braking can convert some of the kinetic energy that the vehicle lost in braking to electric power, on balance such operation is not always advantageous.

For example, on a downhill section traveled at an average speed of 90 kilometers per hour, with regeneration it is possible to recover about 30% of the electric power that would have been expended to travel the same section in the opposite direction at the same speed.

So if we consider that regeneration results in energy losses of approximately 70%, it is easy to deduce that regeneration might not be a convenient solution when we consider that the losses from mechanical friction and aerodynamic drag in converting potential energy to kinetic energy and then reconverting that to potential energy, for example in the case of a downhill section followed by an uphill section, in a vehicle go from 10% to 30% depending on the boundary conditions.

Another drawback of the typical forms of control logic of automatic cruise speed devices of the conventional type consists in that they cannot be easily used in heavy traffic, which requires continual accelerations and decelerations which are dictated by the flow of the traffic itself.

In this case, the driver ends up having to constantly adjust the speed by pressing on the accelerator pedal and on the brake, thus losing, sometimes, awareness of the driving speed.

This uncontrolled use of the accelerator inevitably leads to having increases in the energy consumption of the vehicle, whether it be an electric vehicle or a vehicle powered by internal combustion engine, and also to speeding fines if the section of road traveled is subject to speed limit controls and these are accidentally broken.

Document WO2012123862 discloses a system and a method for automatic management of the energy autonomy of a vehicle.

Document US5627752 discloses a method for the optimum use of an on-board energy supply to minimize consumption.

The aim of the present invention consists in providing a method of managing and controlling the speed of a vehicle which makes it possible to overcome the above mentioned drawbacks, by providing a driving assistance instrument that is such as to optimize the autonomy of vehicles, both electric and internal combustion.

Within this aim an object of the present invention consists in providing a method that can be carried out with devices in common use that are present on vehicles and/or on the market.

This aim and these and other objects which will become better apparent hereinafter are achieved by a method of managing and controlling the speed of an electric vehicle, characterized in that it comprises the following steps of:
- estimating a length of a route to follow,
- measuring an energy capacity of a vehicle,
- calculating a maximum energy consumption per unit of length on the basis of said estimated length and of said measured capacity,
- modulating the instantaneous travel speed of the vehicle so that the instantaneous energy consumption of the vehicle in motion is substantially equal to or less than the calculated maximum energy consumption for each section of the route.

This aim and these and other objects which will become better apparent hereinafter are also achieved by a system which is characterized in that it comprises:
- a reading unit which is adapted to be associated with the data exchange network of a vehicle for the acquisition of the operating parameters of said vehicle,
- a data processing device which is functionally connected to said reading unit and has a user interface for entering calculation preferences and/or for displaying at least one of said operating parameters and the instructions to use the accelerator pedal so as to communicate to the user, instant-by-instant, the need to increase or decrease the press on said pedal so that the instantaneous energy consumption of said vehicle in motion is substantially equal to or less than a maximum energy consumption calculated by said data processing device on the basis of at least part of said operating parameters acquired and of said calculation preferences.

Further characteristics and advantages of the invention will become better apparent from the description of three variations of a preferred, but not exclusive, embodiment of a method of managing and controlling the speed of a vehicle, according to the invention, which is described below by way of non-limiting example.

The method, according to the invention, differs mainly from the methods used for the systems to maintain the speed essentially in that it monitors energy consumption instead of a cruise speed.

In more detail, there can be a step of setting, by the user, of at least one of the following parameters: a minimum admissible speed value, a maximum admissible speed value, a preferred cruising speed value, preferences on the type of route to follow such as, for example, starting point, arrival point, choice of the fastest route, choice of the shortest route and choice of the route with least traffic, choice of the route with least altimetric variation, choice of the route with least energy consumption, and also a maximum admissible value of pollutant emissions, and a minimum value of remaining energy capacity available upon arrival.

Subsequently, there is a step of estimating the length of the route to follow, which is obtained by calculating the distance between a starting point, which is defined for example automatically by way of a GPS detector installed on board the vehicle or set by the user as described above, and an arrival point, which is chosen as the final destination or an intermediate stop for example proximate to an electrical charging point, for an electric vehicle, or any other point of interest.

Conveniently, the route is parameterized on the basis of a topographical road map, predefined on the basis of the route preferences set by the user.

Once the route and the speed conditions with which to travel it are established, the method entails a step of measuring the energy capacity of the vehicle and calculating the maximum energy consumption per unit of length on the basis of the estimated length and of the measured energy capacity.

Advantageously, if the system can draw on at least one among the altimetric data of the route to follow and the weather conditions along that route to follow (such as for example the temperature and density of the air and the strength and direction of the wind along that route to follow) and the overall mass of the vehicle including the unladen mass of the vehicle, the mass of the passengers on board, the mass of the luggage on board and the mass of an optional trailer, then, in the calculation step, the maximum energy consumption can be increased by means of a corrective coefficient taking account of such altimetric data so as to compensate the uphill sections of that route with the downhill sections, to compensate the sections in which it is necessary to use energy to heat the passenger compartment of the vehicle, or to compensate the sections of the route with the wind with the sections against the wind, as well as to compensate any variations in mass.

On the basis of the previous steps, the method proceeds to modulate the instantaneous travel speed of the vehicle so that the instantaneous energy consumption of that vehicle in motion is substantially equal to or less than the calculated maximum energy consumption for each section of the route.

In more detail, during the carrying out of the method, if the instantaneous energy consumption is greater than the maximum energy consumption calculated, then the instantaneous travel speed is kept at a value substantially equal to the minimum admissible speed value, so that the motion of the vehicle at low speed will not be hazardous in relation to the type of road traveled.

If the vehicle is at least partially powered by electricity, then the step of measuring the energy capacity of the vehicle comprises measuring the remaining electric power contained in the electric batteries of the vehicle, and such keeping at the minimum admissible speed value is achieved by way of increasing the energy flow between the electric battery and the electric motor of the vehicle, despite exceeding the calculated maximum energy consumption and/or the calculated maximum emissions.

Differently, if the vehicle is powered by an internal combustion engine, then the step of measuring the energy capacity thereof comprises the measurement of the remaining quantity of fuel contained in the tank of the vehicle.

However, if the instantaneous energy consumption is less than the calculated maximum energy consumption, then the instantaneous travel speed is kept at a value substantially equal to the maximum admissible speed value by way of a braking action which is applied on at least one portion of the kinematic chain which is defined between the electric motor and the wheels of the vehicle.

Advantageously, in a vehicle at least partially powered by electricity, such braking action can be provided by way of the intervention of energy regeneration means which are adapted to convert part of the kinetic energy possessed by the vehicle to electric power so as to brake the vehicle and simultaneously recharge the electric battery.

Differently, if the instantaneous travel speed is comprised between the preferred cruising speed value and the maximum admissible speed value, the vehicle can be kept in neutral, i.e. in a neutral gear such that the transmission from the engine is disengaged, so as to make the vehicle proceed by inertia and thus minimizing the losses, i.e. the vehicle is allowed to proceed by inertia without applying any motive or resistant force.

Conveniently, in order to better optimize the method, this can comprise the iteration, instant-by-instant, of the steps described previously and in particular of the steps of estimation, of measurement and of calculation.

In this way, the modulation step can be performed on the basis of up-to-date data.

In this regard, there can be a step of GPS location of the vehicle for the instant-by-instant updating of the exact position of the vehicle during its navigation.

For example, by setting a minimum speed equal to 70 kilometers per hour, a cruising speed equal to 90 kilometers per hour, a maximum speed equal to 110 kilometers per hour and with a calculated maximum energy consumption of 12 kilowatts as a function of the expected total kilometers traveled on the route, on a flat section such as on a motorway the vehicle will consume 10 kilowatts, remaining under the maximum threshold in order to ensure the required guarantee of autonomy for the total distance of the chosen route.

If an uphill stretch is encountered on this route, the energy supply to the motor will be increased up to the threshold of 12 kilowatts.

The speed will be adjusted as a function of the slope and of the weather conditions, with the wind or against the wind, down to the worst-case condition upon reaching 70 kilometers per hour.

In fact, at such minimum speed the energy supply to the motor will be increased to even more than the threshold of 12 kilowatts in order to keep the speed constant.

Once the uphill stretch has ended and the vehicle is once more on a flat section, the energy supply to the motor will return to below the threshold of 12 kilowatts, i.e. to 10 kilowatts, keeping the cruising speed of 90 kilometers per hour.

If a downhill stretch is encountered on this route, the energy supply will be reduced in order to maintain the cruising speed of 90 kilometers per hour and, upon reaching a condition of energy consumption equal to zero, the vehicle will automatically set itself to limit energy consumption and energy losses to the minimum, until it reaches the maximum speed of 110 kilometers per hour.

Then the regeneration braking begins, which returns the speed, with zero consumption, to 110 kilometers per hour again.

Once the downhill stretch has ended, the vehicle will proceed by inertia, slowing down to the cruising speed of 90 kilometers per hour in order to then resume traction, supplying the motor with less power than the threshold value of 12 kilowatts.

In a first variation of the embodiment according to the invention, the step of modulating the instantaneous travel speed of the vehicle is automatic and comprises remapping the electrical signal in output from the accelerator pedal so as to define, instant-by-instant, a low-pass filter in input to the controller of the vehicle on the basis of a value of the electrical signal that corresponds to the electrical signal necessary to maintain the calculated maximum instantaneous speed so that the instantaneous energy consumption of the vehicle in motion is substantially equal to or less than the calculated maximum energy consumption for each section of the route.

Advantageously, such remapping of the electrical signal in output from the accelerator pedal takes effect with the pedal positioned in a position comprised between its rest position and a preset maximum position, for example the "kick down" position (i.e. the position of maximum depression), so as to be able to provide the maximum possible power if the user presses the pedal beyond the preset maximum position.

In more detail, such remapping is obtained by setting the maximum voltage value in output from the accelerator pedal toward the controller to be the maximum voltage value calculated at the start of the route, to be maintained and which will be updated in each instance over the route.

Therefore, for each portion of the journey, the stroke of the pedal, from the rest position to just before "kick down", will be remapped, for example linearly, by way of an additional electronic controller, so as to enable the user to travel constantly with the foot at the click-stop before "kick down", keeping the maximum voltage value substantially constant for the section in question.

In the event of an emergency, it is always possible to draw on all the power of the vehicle by pressing all the way through to the "kick down" point, in so doing producing the voltage peak mentioned above which will disable the interposed electronics and will pass the clean signal originating from the accelerator pedal to the controller of the motor of the vehicle, without remappings.

Such position just before "kick down", as a consequence of the remapping of the electrical signal originating from the accelerator and directed to the controller, is the position that makes it possible to keep the voltage value in output from the pedal equal to the maximum voltage value.

In a second variation of the embodiment according to the invention, the step of modulating the instantaneous travel speed of the vehicle is automatic and comprises commanding an electromechanical stroke limiter applied to the accelerator pedal of the vehicle so as to define, instant-by-instant, the maximum press of the pedal corresponding to the necessary press to maintain the calculated maximum instantaneous speed so that the instantaneous energy consumption of the vehicle in motion is substantially equal to or less than the calculated maximum energy consumption for each section of the route.

Advantageously, such stroke limiter is of the elastically yielding type so as to allow the complete pressing of the accelerator pedal so as to be able to provide the maximum possible power if the user deems it necessary.

In a third variation of the embodiment according to the invention, the step of modulating the instantaneous travel speed of the vehicle is manual and performed by the user and comprises the visual indication, for example by way of a display integrated in the dashboard of the vehicle or on a portable device, of reaching or of exceeding the optimal speed so as to communicate, instant-by-instant, to the user the need to increase or decrease the press on the accelerator pedal so that the instantaneous energy consumption of the vehicle in motion is substantially equal to or less than the calculated maximum energy consumption for each section of the route.

According to the invention, there is also a system for applying the method described which, depending on the variation used, can comprise:
- a reading unit which is adapted to be associated with the data exchange network of the vehicle for the acquisition of the operating parameters of the vehicle,
- a data processing device, consisting for example of a computer application for mobile telephony devices, which is functionally connected to the reading unit, for example by way of wireless radio communication technologies, and has a user interface for entering calculation preferences and/or for displaying at least one of the operating parameters and the instructions to use the accelerator pedal so as to communicate to the user, instant-by-instant, the need to increase or decrease the press on the accelerator pedal so that the instantaneous energy consumption of the vehicle in motion is substantially equal to or less than a maximum energy consumption calculated by the data processing device on the basis of at least part of the operating parameters acquired and of the supplied calculation preferences,
- an additional electronic controller which can be interposed between the accelerator pedal and the controller of the motor of the vehicle and which is functionally connected, for example by way of wireless radio communication technologies, with the data processing device so as to define, instant-by-instant, a low-pass filter in input to the controller of the motor of the vehicle on the basis of the electrical signal in output from the accelerator pedal so as to keep it below the electrical signal that corresponds to the electrical signal necessary to maintain the calculated maximum instantaneous speed so that the instantaneous energy consumption of the vehicle in motion is substantially equal to or less than the calculated maximum energy consumption for each section of the route,
- an electromechanical actuator which can be associated with the accelerator pedal and which is functionally connected, for example by way of wireless radio communication technologies, with the data processing device for its adjustment with consequent definition of a mechanical stroke limiter so as to define, instant-by-instant, the maximum press of the pedal corresponding to the necessary press to maintain the calculated maximum instantaneous speed so that the instantaneous energy consumption of the vehicle in motion is substantially equal to or less than the calculated maximum energy consumption for each section of the route.

In more detail, such additional electronic controller can furthermore automatically command the increase or the decrease in power in order to keep the driving speed at a constant value.

As mentioned previously, advantageously the electromechanical actuator is of the elastically yielding type so as to allow if needed the complete pressing of the pedal so as to be able to provide the maximum possible power if the user deems it necessary.

In practice it has been found that the system for and the method of managing and controlling the speed of an electric vehicle, according to the invention, fully achieves the set aim and objects, in that it makes it possible to increase the operating time of a vehicle, by minimizing the energy losses and always keeping the speed of the vehicle under control.

An advantage of the method according to the present invention consists in that it can be carried out by taking advantage of the technologies that are now usually found in electrically-powered vehicles, simply by updating the software that manages the electric vehicle.

The method of managing and controlling the speed of an electric vehicle, thus conceived, and the system for applying this method, are susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

## Claims

1. A method of managing and controlling the speed of a vehicle, the method comprising the steps of:
- estimating a length of a route to follow,
- measuring an energy capacity of a vehicle,
- calculating a maximum energy consumption per unit of length on the basis of said estimated length and of said measured energy capacity and
- modulating the instantaneous travel speed of said vehicle so that the instantaneous energy consumption of said vehicle in motion is substantially equal to or less than said calculated maximum energy consumption for each section of said route
**characterized in that** said step of modulating the instantaneous travel speed of said vehicle is manual and performed by the user and comprises the visual indication of reaching or of exceeding the optimal speed so as to communicate, instant-by-instant, to said user the need to increase or decrease the press on the accelerator pedal so that the instantaneous energy consumption of said vehicle in motion is substantially equal to or less than said calculated maximum energy consumption for each section of said route.

2. The method according to claim 1, **characterized in that**, in said estimation step, said length is obtained by calculating the distance between a starting point and an arrival point, parameterizing said route on the basis of a predefined topographical road map.

3. The method according to claim 2, **characterized in that** said starting point is defined automatically by way of a GPS sensor installed on board said vehicle.

4. The method according to one or more of the preceding claims, **characterized in that**, in said calculation step, said maximum energy consumption is increased by means of a corrective coefficient taking account of at least one of the following: the altimetric data of said route to follow in order to compensate the uphill sections of said route with the downhill sections, the weather conditions along said route to follow in order to compensate the sections of said route with the wind with the sections against the wind, or the temperature and humidity of the air in order to compensate the sections of said route in which it is necessary to use energy to heat the passenger compartment of the vehicle, and the overall mass of said vehicle including the unladen mass of the vehicle, the mass of the passengers on board, the mass of the luggage on board and the mass of an optional trailer.

5. The method according to one or more of the preceding claims, **characterized in that** it comprises a step of setting, by the user, of at least one of the following parameters: a minimum admissible speed value, a maximum admissible speed value, a preferred cruising speed value, preferences on the type of route to follow, choice of the route with least altimetric variation, choice of the route with least energy consumption, a maximum admissible value of pollutant emissions, and a minimum value of remaining energy capacity available upon arrival.

6. The method according to claim 5, **characterized in that** said preferences on the type of route to follow comprise at least one of the following parameters: starting point, arrival point, choice of the fastest route, choice of the shortest route, and choice of the route with least traffic.

7. The method according to one or more of the preceding claims, **characterized in that**, in said modulation step, said instantaneous travel speed is maintained at a value that is substantially equal to said minimum admissible speed value if said instantaneous energy consumption is greater than said calculated maximum energy consumption.

8. The method according to one or more of the preceding claims, **characterized in that**, in said modulation step, said instantaneous travel speed is kept at a value that is substantially equal to said maximum admissible speed value if said instantaneous energy consumption is less than said calculated maximum energy consumption.

9. The method according to one or more of the preceding claims, **characterized in that**, in said modulation step, said vehicle is kept in neutral or allowed to proceed by inertia without the application of any motive or resistant force if said instantaneous travel speed is comprised between said preferred cruising speed value and said maximum admissible speed value.

10. The method according to one or more of the preceding claims, **characterized in that** it comprises an instant-by-instant iteration of said steps of estimation, measurement and calculation, so that said modulation step is performed on the basis of up-to-date data.

11. The method according to claim 10, **characterized in that** it comprises a step of GPS location of said vehicle for the instant-by-instant updating of the exact position of said vehicle during navigation.

12. The method according to one or more of the preceding claims, **characterized in that** said vehicle is at least partially powered by electricity.

13. The method according to claim 12, **characterized in that** said step of measuring the energy capacity of said vehicle comprises measuring the remaining electric power contained in the electric batteries of said vehicle.

14. The method according to claims 12 or 13, **characterized in that** said keeping at said maximum admissible speed value is achieved by way of a braking action which is applied on at least one portion of the kinematic chain which is defined between an electric motor and the wheels of said vehicle.

15. The method according to one or more of the claims between 12 or 14, **characterized in that** said keeping at said minimum admissible speed value is achieved by way of increasing the energy flow between said electric battery and the electric motor of said vehicle.

16. The method according to one or more of the claims between 12 or 15, **characterized in that** said braking action is provided by way of the intervention of energy regeneration means which are adapted to convert part of the kinetic energy possessed by said vehicle to electric power so as to brake said vehicle and simultaneously recharge said electric battery.

17. The method according to one or more of claims from 1 to 11, **characterized in that** said vehicle is provided with an internal combustion engine and **in that** said step of measuring the energy capacity of said vehicle comprises the measurement of the remaining quantity of fuel contained in the tank of said vehicle.

18. A system for applying a method according to one or more of the preceding claims, **characterized in that** it comprises:
- a reading unit which is adapted to be associated with the data exchange network of a vehicle for the acquisition of the operating parameters of said vehicle,
- a data processing device which is functionally connected to said reading unit and has a user interface for entering calculation preferences and/or for displaying at least one of said operating parameters and the instructions to use the accelerator pedal so as to communicate to the user, instant-by-instant, the need to increase or decrease the press on said pedal so that the instantaneous energy consumption of said vehicle in motion is substantially equal to or less than a maximum energy consumption calculated by said data processing device on the basis of at least part of said operating parameters acquired and of said calculation preferences.

19. The system according to claim 18, **characterized in that** it comprises an additional electronic controller which can be electrically interposed between said accelerator pedal and the controller of the motor of the vehicle and which is functionally connected with said data processing device so as to define, instant-by-instant, a low-pass filter in input to said controller of the vehicle on the basis of the electrical signal in output from said accelerator pedal so as to keep it below the electrical signal that corresponds to the electrical signal necessary to maintain the calculated maximum instantaneous speed, so that the instantaneous energy consumption of said vehicle in motion is substantially equal to or less than said calculated maximum energy consumption for each section of said route, said additional electronic controller automatically commanding the increase or the decrease in power in order to keep the driving speed at a constant value.

20. The system according to claims 18 or 19, **characterized in that** it comprises an electromechanical actuator which can be associated with said pedal and which is functionally connected with said data processing device for its adjustment with consequent definition of a mechanical stroke limiter so as to define, instant-by-instant, the maximum press of said pedal corresponding to the necessary press to maintain the calculated maximum instantaneous speed so that the instantaneous energy consumption of said vehicle in motion is substantially equal to or less than said calculated maximum energy consumption for each section of said route.

21. The system according to claim 20, **characterized in that** said electromechanical actuator is of the elastically yielding type so as to allow the complete pressing of said pedal so as to be able to provide the maximum possible power if the user deems it necessary.

## Patentansprüche

1. Ein Verfahren zur Verwaltung und Steuerung der Geschwindigkeit eines Fahrzeugs, wobei das Verfahren folgende Schritte umfasst:
- das Bewerten einer Länge einer zu folgenden Route,
- das Messen einer Energiekapazität eines Fahrzeugs,
- das Berechnen eines maximalen Energieverbrauchs je Längeneinheit auf der Grundlage der bewerteten Länge und der gemessenen Energiekapazität, und
- das Modulieren der momentanen Fahrgeschwindigkeit des Fahrzeugs, so dass der momentane Energieverbrauch des Fahrzeugs in Bewegung im Wesentlichen gleich oder weniger als der berechnete maximale Energieverbrauch für jeden Abschnitt der Route ist,
**dadurch gekennzeichnet, dass** der Schritt des Modulierens der momentanen Fahrgeschwindigkeit des Fahrzeugs manuell ist und vom Benutzer durchgeführt wird und die visuelle Anzeige des Erreichens oder Überschreitens der optimalen Geschwindigkeit umfasst, um dem Benutzer zu jedem Zeitpunkt die Notwendigkeit zu kommunizieren, den Druck auf das Gaspedal zu erhöhen oder zu vermindern, so dass der momentane Energieverbrauch des Fahrzeugs in Bewegung im Wesentlichen gleich oder weniger als der berechnete maximale Energieverbrauch für jeden Abschnitt der Route ist.

2. Das Verfahren gemäß Anspruch 1, **dadurch gekennzeichnet, dass** in dem Bewertungsschritt die Länge gewonnen wird durch Berechnen des Abstands zwischen einem Startpunkt und einem Zielpunkt, wobei die Route auf der Grundlage einer vordefinierten topographischen Straßenkarte parametriert wird.

3. Das Verfahren gemäß Anspruch 2, **dadurch gekennzeichnet, dass** der Startpunkt automatisch durch einen GPS-Sensor definiert ist, der an Bord des Fahrzeugs installiert ist.

4. Das Verfahren gemäß einem oder mehreren der obigen Ansprüche, **dadurch gekennzeichnet, dass** in dem Berechnungsschritt der maximale Energieverbrauch mit Hilfe eines korrektiven Koeffizienten erhöht wird, welcher mindestens eines von Folgendem berücksichtigt: die Höhendaten der zu folgenden Route, um die bergauf zu fahrenden Abschnitte der Route durch die bergab zu fahrenden Abschnitte zu kompensieren, die Wetterbedingungen entlang der zu folgenden Route, um die Abschnitte der Route mit Rückenwind durch die Abschnitte mit Gegenwind zu kompensieren oder die Lufttemperatur und -feuchtigkeit um die Abschnitte der Route in denen es erforderlich ist, Energie zu verbrauchen, um die Fahrgastzelle des Fahrzeugs zu heizen, zu kompensieren und die Gesamtmasse des Fahrzeugs einschließlich der Leermasse des Fahrzeugs, der Masse der Passagiere an Bord, der Masse des Gepäcks an Bord und der Masse eines optionalen Anhängers.

5. Das Verfahren gemäß einem oder mehreren der obigen Ansprüche, **dadurch gekennzeichnet, dass** es einen Schritt des Festlegens mindestens eines der folgenden Parameter durch den Benutzer umfasst: einen zulässigen Mindestgeschwindigkeitswert, einen zulässigen Höchstgeschwindigkeitswert, einen bevorzugten Fahrgeschwindigkeitswert, Präferenzen zur Art der zu folgenden Route, Wahl der Route mit der geringsten Höhenschwankung, Wahl der Route mit dem geringsten Energieverbrauch, maximal zulässiger Wert von Schadstoffemissionen und Mindestwert der verfügbaren restlichen Energiekapazität bei Ankunft.

6. Das Verfahren gemäß Anspruch 5, **dadurch gekennzeichnet, dass** die Präferenzen zu der Art der zu folgenden Route mindestens einen der folgenden Parameter umfassen: Startpunkt, Ankunftspunkt, Wahl der schnellsten Route, Wahl der kürzesten Route und Wahl der Route mit geringstem Verkehrsaufkommen.

7. Das Verfahren gemäß einem oder mehreren der obigen Ansprüche, **dadurch gekennzeichnet, dass** in dem Modulationsschritt die momentane Fahrgeschwindigkeit auf einem Wert gehalten wird, der im Wesentlichen gleich dem zulässigen Mindestgeschwindigkeitswert ist, wenn der momentane Energieverbrauch höher ist als der berechnete maximale Energieverbrauch.

8. Das Verfahren gemäß einem oder mehreren der obigen Ansprüche, **dadurch gekennzeichnet, dass** in dem Modulationsschritt die momentane Fahrgeschwindigkeit bei einem Wert gehalten wird, der im Wesentlichen gleich den zulässigen Höchstgeschwindigkeitswert ist, wenn der momentane Energieverbrauch geringer ist als der berechnete maximale Energieverbrauch.

9. Das Verfahren gemäß einem oder mehreren der obigen Ansprüche, **dadurch gekennzeichnet, dass** in dem Modulationsschritt das Fahrzeug im Leerlauf gehalten wird oder durch Trägheit, ohne die Ausübung von Bewegungs- oder Widerstandskraft, rollen gelassen wird, wenn die momentane Fahrgeschwindigkeit zwischen dem bevorzugten Fahrgeschwindigkeitswert und dem zulässigen Höchstgeschwindigkeitswert liegt.

10. Das Verfahren gemäß einem oder mehreren der obigen Ansprüche, **dadurch gekennzeichnet, dass** es eine Punkt-für-Punkt-Wiederholung der Schritte der Bewertung, Messung und Berechnung umfasst, so dass der Modulationsschritt auf der Grundlage aktueller Daten durchgeführt wird.

11. Das Verfahren gemäß Anspruch 10, **dadurch gekennzeichnet, dass** es einen Schritt der GPS-Positionierung des Fahrzeugs zur Punkt-für-Punkt-Aktualisierung der exakten Position des Fahrzeugs während der Navigation umfasst.

12. Das Verfahren gemäß einem oder mehreren der obigen Ansprüche, **dadurch gekennzeichnet, dass** das Fahrzeug zumindest teilweise elektrisch angetrieben ist.

13. Das Verfahren gemäß Anspruch 12, **dadurch gekennzeichnet, dass** der Schritt der Messung der Energiekapazität des Fahrzeugs die Messung der restlichen elektrischen Leistung umfasst, die in den elektrischen Batterien des Fahrzeugs enthalten ist.

14. Das Verfahren gemäß Anspruch 12 oder 13, **dadurch gekennzeichnet, dass** das Halten bei dem zulässigen Höchstgeschwindigkeitswert mit Hilfe eines Bremsvorgangs erzielt wird, der an mindestens einem Teil der kinematischen Kette angewandt wird, welche zwischen einem Elektromotor und den Rädern des Fahrzeugs bestimmt ist.

15. Das Verfahren gemäß einem oder mehreren der Ansprüche zwischen 12 oder 14, **dadurch gekennzeichnet, dass** das Halten bei dem zulässigen Mindestgeschwindigkeitswert durch Erhöhung des Energieflusses zwischen der elektrischen Batterie und dem Elektromotor des Fahrzeugs erzielt wird.

16. Das Verfahren gemäß einem oder mehreren der Ansprüche zwischen 12 oder 15, **dadurch gekennzeichnet, dass** der Bremsvorgang durch Intervention von Energierückgewinnungsmitteln durchgeführt wird, die ausgebildet sind, um einen Teil der kinetischen Energie des Fahrzeugs in elektrische Leistung umzuwandeln, um das Fahrzeug abzubremsen und gleichzeitig die elektrische Batterie wieder aufzuladen.

17. Das Verfahren gemäß einem oder mehreren der Ansprüche 1 bis 11, **dadurch gekennzeichnet, dass** das Fahrzeug mit einem Verbrennungsmotor ausgestattet ist und dadurch, dass der Schritt der Messung der Energiekapazität des Fahrzeugs die Messung der restlichen Kraftstoffmenge umfasst, die in dem Fahrzeugtank enthalten ist.

18. Ein System zur Anwendung eines Verfahrens gemäß einem oder mehreren der obigen Ansprüche, **dadurch gekennzeichnet, dass** es Folgendes umfasst:
- eine Leseeinheit, die ausgebildet ist, um für die Erfassung der Betriebsparameter des Fahrzeugs mit dem Datenaustauschnetz eines Fahrzeugs verbunden zu werden,
- eine Datenverarbeitungsvorrichtung, die funktional mit der Leseeinheit verbunden ist, und eine Benutzeroberfläche für die Eingabe von Berechnungspräferenzen und/oder für die Anzeige mindestens eines der Betriebsparameter und der Anweisungen zur Nutzung des Gaspedals hat, um dem Benutzer zu jedem Zeitpunkt die Notwendigkeit anzuzeigen, den Druck auf das Pedal zu erhöhen oder zu vermindern, so dass der momentane Energieverbrauch des Fahrzeugs in Bewegung im Wesentlichen gleich oder weniger als ein maximaler Energieverbrauch ist, der von der Datenverarbeitungsvorrichtung auf der Grundlage mindestens eines Teils der erfassten Betriebsparameter und der Berechnungspräferenzen berechnet wird.

19. Das System gemäß Anspruch 18, **dadurch gekennzeichnet, dass** es eine zusätzliche elektronische Steuerung umfasst, die elektrisch zwischen dem Gaspedal und der Steuerung des Fahrzeugmotors angeordnet sein kann und die funktional mit der Datenverarbeitungsvorrichtung verbunden ist, um zu jedem Zeitpunkt einen Tiefpassfilter am Eingang der Steuerung des Fahrzeugs auf der Grundlage des elektrischen Signals am Ausgang des Gaspedals zu bestimmen, um es unterhalb des elektrischen Signals zu halten, das den elektrischen Signal entspricht, welches notwendig ist, um die berechnete momentane Höchstgeschwindigkeit beizubehalten, so dass der momentane Energieverbrauch des Fahrzeugs in Bewegung im Wesentlichen gleich oder weniger ist, als der berechnete maximale Energieverbrauch für jeden Abschnitt der Route, wobei die zusätzliche elektronische Steuerung automatisch die Zunahme oder Abnahme der Leistung anordnet, um die Fahrgeschwindigkeit bei einem konstanten Wert zu halten.

20. Das System gemäß Anspruch 18 oder 19, **dadurch gekennzeichnet, dass** es ein elektromechanisches Antriebselement umfasst, das mit dem Pedal verbunden sein kann und funktional mit der Datenverarbeitungsvorrichtung zum Zwecke seiner Einstellung verbunden ist, mit daraus folgender Definition eines mechanischen Hubbegrenzers, um zu jedem Zeitpunkt den maximalen Druck des Pedals zu bestimmen, der dem Druck entspricht, der notwendig ist, um die berechnete momentane Höchstgeschwindigkeit aufrecht zu erhalten, so dass der momentane Energieverbrauch des Fahrzeugs in Bewegung im Wesentlichen gleich oder weniger ist als der berechnete maximale Energieverbrauch für jeden Abschnitt der Route.

21. Das System gemäß Anspruch 20, **dadurch gekennzeichnet, dass** das elektromechanische Antriebselement vom elastisch ausweichenden Typ ist, um das vollständige Herunterdrücken des Pedals zu gestatten, um so die maximal mögliche Leistung bereitzustellen, wenn der Benutzer dies für erforderlich hält.

## Revendications

1. Procédé de gestion et de commande de la vitesse d'un véhicule, le procédé comprenant les étapes suivantes :
- estimer une longueur d'un itinéraire à suivre,
- mesurer une capacité énergétique d'un véhicule,
- calculer une consommation d'énergie maximale par unité de longueur d'après ladite longueur estimée et ladite capacité énergétique mesurée et
- moduler la vitesse de déplacement instantanée dudit véhicule de telle manière que la consommation d'énergie instantanée dudit véhicule en mouvement est sensiblement inférieure ou égale à ladite consommation d'énergie maximale calculée pour chaque portion dudit itinéraire ;
**caractérisé en ce que** ladite étape de modulation de la vitesse de déplacement instantanée dudit véhicule est manuelle et exécutée par l'utilisateur et comprend l'indication visuelle que l'on atteint ou que l'on dépasse la vitesse optimale afin de communiquer, instant par instant, audit utilisateur le besoin d'augmenter ou de réduire la pression exercée sur la pédale d'accélérateur de sorte que la consommation d'énergie instantanée dudit véhicule en mouvement est sensiblement inférieure ou égale à ladite consommation d'énergie maximale calculée pour chaque portion dudit itinéraire.

2. Procédé selon la revendication 1, **caractérisé en ce que**, dans ladite étape d'estimation, ladite longueur est obtenue en calculant la distance entre un point de départ et un point d'arrivée, en paramétrant ledit itinéraire d'après une carte routière topographique prédéfinie.

3. Procédé selon la revendication 2, **caractérisé en ce que** ledit point de départ est défini automatiquement au moyen d'un capteur GPS installé à bord dudit véhicule.

4. Procédé selon l'une ou plusieurs des revendications précédentes, **caractérisé en ce que**, dans ladite étape de calcul, ladite consommation d'énergie maximale est augmentée au moyen d'un coefficient correcteur qui prend en compte au moins l'un des éléments suivants : les données altimétriques dudit itinéraire à suivre afin de compenser les portions en montée dudit itinéraire par les portions en descente, les conditions météorologiques le long dudit itinéraire à suivre afin de compenser les portions dudit itinéraire avec le vent dans le dos avec les portions avec le vent de face, ou la température et l'humidité de l'air afin de compenser les portions dudit itinéraire dans lesquelles il est nécessaire d'utiliser de l'énergie pour chauffer l'habitacle du véhicule, et la masse globale dudit véhicule incluant la masse à vide du véhicule, la masse des passagers à bord, la masse des bagages à bord et la masse d'une remorque optionnelle.

5. Procédé selon l'une ou plusieurs des revendications précédentes, **caractérisé en ce qu'**il comprend une étape de réglage, par l'utilisateur, d'au moins l'un des paramètres suivants : une valeur de vitesse minimum admissible, une valeur de vitesse maximum admissible, une valeur de vitesse de croisière préférée, des préférences sur le type d'itinéraire à suivre, un choix de l'itinéraire avec le moins de variations altimétriques, un choix de l'itinéraire avec la plus faible consommation d'énergie, une valeur maximale admissible d'émissions de polluants, et une valeur minimum de capacité énergétique restante disponible à l'arrivée.

6. Procédé selon la revendication 5, **caractérisé en ce que** lesdites préférences sur le type d'itinéraire à suivre comprennent au moins l'un des paramètres suivants : point de départ, point d'arrivée, choix de l'itinéraire le plus rapide, choix de l'itinéraire le plus court, et choix de l'itinéraire comportant le moins de circulation.

7. Procédé selon l'une ou plusieurs des revendications précédentes, **caractérisé en ce que**, dans ladite étape de modulation, ladite vitesse de déplacement instantanée est maintenue à une valeur qui est sensiblement égale à ladite valeur de vitesse minimale admissible si ladite consommation d'énergie instantanée est supérieure à ladite consommation d'énergie maximale calculée.

8. Procédé selon l'une ou plusieurs des revendications précédentes, **caractérisé en ce que**, dans ladite étape de modulation, ladite vitesse de déplacement instantanée est maintenue à une valeur qui est sensiblement égale à ladite valeur de vitesse maximale admissible si ladite consommation d'énergie instantanée est inférieure à ladite consommation d'énergie maximale calculée.

9. Procédé selon l'une ou plusieurs des revendications précédentes, **caractérisé en ce que**, dans ladite étape de modulation, ledit véhicule est maintenu au point mort ou est autorisé à continuer par inertie sans l'application d'aucune force motrice ou résistante si ladite vitesse de déplacement instantanée est comprise entre ladite valeur de vitesse de croisière préférée et ladite valeur de vitesse maximale admissible.

10. Procédé selon l'une ou plusieurs des revendications précédentes, **caractérisé en ce qu'**il comprend une itération instant par instant desdites étapes d'estimation, de mesure et de calcul, de sorte que ladite étape de modulation est réalisée sur la base de données mises à jour.

11. Procédé selon la revendication 10, **caractérisé en ce qu'**il comprend une étape de localisation GPS dudit véhicule pour la mise à jour instant par instant de la position exacte dudit véhicule pendant la navigation.

12. Procédé selon l'une ou plusieurs des revendications précédentes, **caractérisé en ce que** ledit véhicule est au moins partiellement motorisé de façon électrique.

13. Procédé selon la revendication 12, **caractérisé en ce que** ladite étape de mesure de la capacité énergétique dudit véhicule comprend la mesure de l'énergie électrique restante contenue dans les batteries électriques dudit véhicule.

14. Procédé selon la revendication 12 ou 13, **caractérisé en ce que** ledit maintien à ladite valeur de vitesse maximale admissible est réalisé au moyen d'une action de freinage qui est appliquée sur au moins une partie de la chaîne cinématique qui est définie entre un moteur électrique et les roues dudit véhicule.

15. Procédé selon l'une ou plusieurs des revendications entre 12 ou 14, **caractérisé en ce que** ledit maintien à ladite valeur de vitesse minimale admissible est réalisé au moyen d'une augmentation du flux d'énergie entre ladite batterie électrique et le moteur électrique dudit véhicule.

16. Procédé selon l'une ou plusieurs des revendications entre 12 ou 15, **caractérisé en ce que** ladite action de freinage est fournie à l'aide de l'intervention d'un moyen de récupération d'énergie qui est adapté pour convertir une partie de l'énergie cinétique possédée par ledit véhicule en énergie électrique afin de freiner ledit véhicule et de recharger simultanément ladite batterie électrique.

17. Procédé selon l'une ou plusieurs des revendications 1 à 11, **caractérisé en ce que** ledit véhicule est pourvu d'un moteur à combustion interne et **en ce que** ladite étape de mesure de la capacité énergétique dudit véhicule comprend la mesure de la quantité restante de carburant contenue dans le réservoir dudit véhicule.

18. Système permettant d'appliquer un procédé selon l'une ou plusieurs des revendications précédentes, **caractérisé en ce qu'**il comprend :
- une unité de lecture qui est adaptée pour être associée au réseau d'échange de données d'un véhicule pour l'acquisition des paramètres fonctionnels dudit véhicule,
- un dispositif de traitement de données qui est connecté fonctionnellement à ladite unité de lecture et qui comporte une interface utilisateur pour entrer des préférences de calcul et/ou pour afficher au moins l'un desdits paramètres fonctionnels et les instructions pour utiliser la pédale d'accélérateur afin de communiquer à l'utilisateur, instant par instant, le besoin d'augmenter ou de réduire la pression exercée sur ladite pédale de sorte que la consommation d'énergie instantanée dudit véhicule en mouvement est sensiblement inférieure ou égale à une consommation d'énergie maximale calculée par ledit dispositif de traitement de données d'après au moins une partie desdits paramètres fonctionnels et desdites préférences de calcul.

19. Système selon la revendication 18, **caractérisé en ce qu'**il comprend un contrôleur électronique additionnel qui peut être intercalé électriquement entre ladite pédale d'accélérateur et le contrôleur du moteur du véhicule et qui est fonctionnellement connecté audit dispositif de traitement de données afin de définir, instant par instant, un filtre passe-bas en entrée dudit contrôleur du véhicule d'après le signal électrique en sortie de ladite pédale d'accélérateur afin de le maintenir sous le signal électrique qui correspond au signal électrique nécessaire pour maintenir la vitesse instantanée maximale calculée, de telle manière que la consommation d'énergie instantanée dudit véhicule en mouvement est sensiblement inférieure ou égale à ladite consommation d'énergie maximale calculée pour chaque portion dudit itinéraire, ledit contrôleur électronique additionnel commandant automatiquement l'augmentation ou la diminution de puissance afin de maintenir la vitesse d'entraînement à une valeur constante.

20. Système selon la revendication 18 ou 19, **caractérisé en ce qu'**il comprend un actionneur électromécanique qui peut être associé à ladite pédale et qui est connecté fonctionnellement audit dispositif de traitement de données pour son ajustement avec une définition consécutive d'un limiteur de course mécanique afin de définir, instant par instant, la pression maximale exercée sur ladite pédale correspondant à la pression nécessaire pour maintenir la vitesse instantanée maximale calculée de telle manière que la consommation d'énergie instantanée dudit véhicule en mouvement est sensiblement inférieure ou égale à ladite consommation d'énergie maximale calculée pour chaque portion dudit itinéraire.

21. Système selon la revendication 20, **caractérisé en ce que** ledit actionneur électromécanique est du type déformable élastiquement afin de permettre l'enfoncement complet de ladite pédale afin d'être apte à fournir la puissance maximale possible si l'utilisateur le juge nécessaire.
